# EUROPEAN PATENT SPECIFICATION

(11) **EP 1 877 685 B1**
(45) Date of publication and mention of the grant of the patent: **07.03.2012**
(21) Application number: 06721445.2
(22) Date of filing: 02.05.2006
(51) Int. Cl.: F16H 48/28, F16H 48/20, F16D 1/06, F16D 11/14

(54) **LOCKING DIFFERENTIAL IMPROVEMENTS**
VERBESSERUNGEN FÜR DIFFERENTIALSPERRE
DIFFERENTIEL A VERROUILLAGE AMELIORE

(30) Priority: 05.05.2005 AU 2005902268
(43) Date of publication of application: 16.01.2008
(73) Proprietor: 4WD Equipment SA Pty. Ltd., Gilles Plains, S.A. 5086 (AU)
(72) Inventor: HOBERG, Raleigh, Klemzig, S.A. 5087 (AU)
(74) Representative: Miller, James Lionel Woolverton
(86) International application number: PCT/AU2006/000566
(87) International publication number: WO 2006/116806

(56) References cited:
- US-A- 1 477 311
- US-A- 5 413 015
- US-A- 5 715 733
- US-A- 5 727 430
- US-A- 5 836 220
- US-B1- 6 374 701

## Description

### TECHNICAL FIELD

This invention relates to locking differentials particularly of a type having annular friction hack clutch assemblies for normally connecting a drive shaft of a vehicle to a pair of axially aligned driven axle shafts.

### BACKGROUND OF THE INVENTION

The technical area to which this invention is directed is well set out in the various other technical specification such as US Patent Specification 5836220 published in 1998, and US Patent 5413015 in the name of Zentmyer and US Patent 5715733 in the name of Dissett, showing the features of the preamble of claim 1. In each of these cases there is disclosed a pair of clutch assemblies which are biased apart by a plurality of spring assemblies each including a locking pin collinearly arranged relative to one or more helical springs.

The problem to which this invention is directed can best be explained by reference to drawings in US Patent 5715733 where there is shown in Figures 14, 15 and 16, the way in which a spring is inserted through a spring access opening to 32 so as to act collinearly with the locking pin.

The problem relates to the manufacture of the clutch member that is shown in Figures 9, 10, 11, and 12 of that same Patent 5715733, which requires complex tooling and manufacturing operations in order to provide means to secure the spring assemblies.

The cost of manufacture of such a product depends upon the difficulties associated with any manufacturing technique.

I have found that by making a change in the shape of the spring holding aperture, that this can then lead to significant savings in relation to manufacturing time and costs.

### BRIEF SUMMARY OF THE INVENTION

What I propose is that instead of having a spring access opening as is shown which is the form of a window passing through to an oversized bore, that the spring access opening be lengthened so that it is opened to the inner face.

This on its own however, would simply mean that a spring would not be able to be kept in position, so that accordingly, I provide means to positively locate the spring at the inner end, and provide an interlocking fit with the spring with respect to the retaining pin at the other end of the spring.

The advantage of this change arises because it allows the manufacture of the clutch member to be restricted to only use three axes instead of as has been hitherto the case, four axes.

As will be seen, if an end mill is directed into the face of the clutch member to cut the oversized spring retaining bore, it is then a simple matter to cause this to proceed also diametrically so as to cut through to the outer wall and through this leaving thereby this slot.

This therefore avoids to having to continue with a machining operation in which a tool has to then be orientated so as to be rotating about a diametrical direction and to effect the cutting of the elongate spring access opening.

As this is avoided, the part itself becomes much simpler to manufacture.

Further, however, a less complex machining process can be involved and in some instances, this can include therefore, more economically usable machines than might be the case if a fourth axis cut is required.

Yet a further advantage of the invention, is that it facilitates batch production, where a multitude of parts can be manufactured by a single machine without the need to re-orientate the parts.

The invention in one form could be said to reside in a differential locker having a clutch member having a spring retaining aperture for holding a spring in collinear alignment with a pin in a correspondingly positioned further clutch member characterized in that spring access through the side of the clutch member is provided by a slot passing fully through the side wall of the clutch member and extending from an inner face.

In preference, the spring when retained in such a clutch member inter-engages with an end of a collinearly aligned pin.

In preference, the other end of the spring is held by being located within a bore within the spring retaining aperture.

In preference, the pair of assemblies have a plurality of pins and springs so aligned and there are symmetrically arranged bores on one side and spring retaining apertures in the other.

In preference, the spring in question is a helical spring and is retained with respect to the end of the collinearly aligned pin by the pin having a portion of narrower diameter such as to fit within the center core of the helical spring.

In preference, the spring retaining aperture includes a bore which is deeper than the opening to the side of the clutch member and which has a diameter at least as big as the diameter of the bottom of the spring so that the spring will seat thereby and be retained therein when in use.

A significant advantage of the arrangement described is also that it is a lot easier in assembly to insert a spring into a slot (the slot being produced by directing an end mill into the face of the clutch member to cut the oversized spring retaining bore, then directing the end mill diametrically to cut through the outer wall of the clutch member) when in the confined space provided by a differential housed sufficiently to insert this type of clutch member.

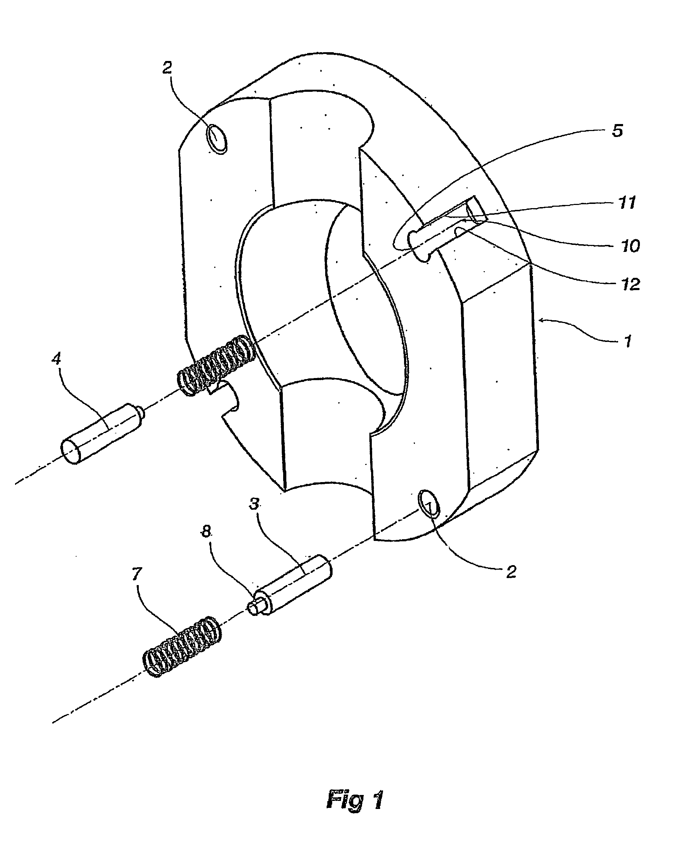

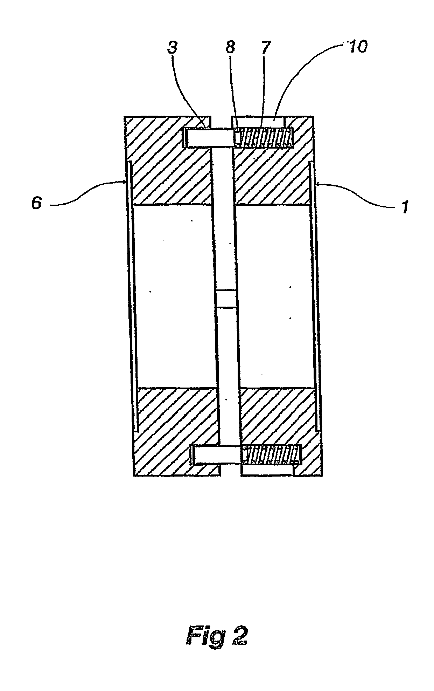

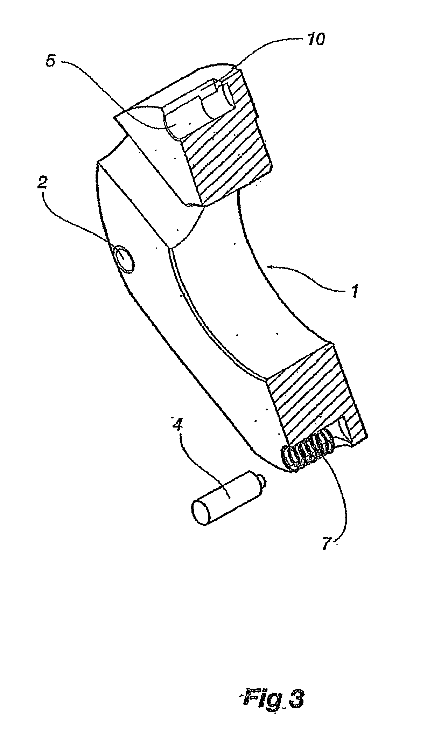

For a better understanding of this invention it will now be described with the assistance of drawings wherein Figure 1 is a perspective view of a clutch member with associated springs and collinearly aligned pins, Figure 2 is a cross sectional view showing the assembly of the two clutch members with a collinearly held pin partially engaging into the spring retaining aperture, and Figure 3 is a further perspective view and part cut away illustrating the way in which the pin is aligned with the spring retaining oversized aperture and how the pin sits within the bottom bore and interlocks with a bottom end of the collinear pin.

Referring in detail to the drawings, as will be seen we are describing a clutch member which is one part of a clutch assembly (6), the clutch member being shown as 1 including a plurality of apertures 2 which are arranged to receive with relatively close fitting slideable retention, cylindrically shaped pins 3 and 4.

The shape of these spring retaining apertures is relatively complex in that they are intended to be able to be cut with a single cutting tool programmed to follow a particular path.

This path includes cutting an elongate deep bore (5) with one part deeper than another part so as to provide a seat for a spring.

A further path for the tool is to proceed from a central position relative to the elongation of the oversized bore (5) out through the wall so as to thereby cut a slot 10 with parallel sides 11, 12 and which has a width at least sufficient for a spring 7 to be passed there through.

The spring 7 is intended to be interlocked with an end 8 of the pin (3) which has a portion at the end of the lesser diameter than the main body of the pin and this is such that it will fit within the bore of the helical spring.

The assembly thereafter is of course enabled by the fact that with the pins in position, each spring can be inserted with a relative degree of freedom that such that the portion at the end of the pin shall be located into the bore of a respective helical spring and the bottom of this spring so as to extend and be seated and retained thereby in a deep bore portion.

As has been previously described, the advantage of this arrangement is two fold, one is that it is now much cheaper and more convenient to manufacture a clutch member having an aperture of this type and secondly, it facilitates the subsequent installation of a differential locker according to this design.

Throughout this specification the purpose has been to illustrate the invention and not to limit this.

## Claims

1. A differential locker having a clutch member (1) having a spring retaining aperture (2) for holding a spring (7) in collinear alignment with a pin (3) in a correspondingly positioned further clutch member, the differential locker being **characterized in that** spring access through a side of the clutch member is provided by a slot (10) passing fully through a side wall of the clutch member and extending from an inner face of the clutch member.

2. The differential locker of claim 1 wherein the spring (7) when retained in the clutch member (1) inter-engages with an end (8) of a collinearly aligned pin (3).

3. The differential locker of claim 2 wherein the other end of the spring (7) is held by being located within a bore (5) within the spring retaining aperture (2).

4. The differential locker of claim 1 wherein there is a pair of clutch members (1) to form part of a clutch assembly (6).

5. The differential locker of claim 4 wherein the pair of clutch members (1) have a plurality of pins (3) and springs (7) so aligned and there are symmetrically arranged bores (5) on one side and spring retaining apertures (2) in the other.

6. The differential locker of claim 1 wherein the spring (7) is a helical spring and is retained with respect to the end of the collinearly aligned pin (3) by the pin having a portion of narrower diameter (8) such as to fit within the center core of the helical spring.

7. The differential locker of claim 3 wherein the spring retaining aperture (2) includes a bore which is deeper than the slot (10) and which has a diameter at least as big as the diameter of the bottom of the spring (7) so that the spring will seat thereby and be retained therein.

## Patentansprüche

1. Differentialsperre mit einem Kupplungsglied (1), das eine Federhalteöffnung (2) zum Halten einer Feder (7) in kollinearer Ausrichtung mit einem Bolzen (3) in einem entsprechend positionierten weiteren Kupplungsglied aufweist, wobei die Differentialsperre **dadurch gekennzeichnet ist, dass** ein Federzugang durch eine Seite des Kupplungsglieds durch einen Schlitz (10) vorgesehen ist, der vollständig durch eine Seitenwand des Kupplungsglieds hindurch verläuft und sich von einer Innenfläche des Kupplungsglieds aus erstreckt.

2. Differentialsperre nach Anspruch 1, wobei die Feder (7), wenn sie in dem Kupplungsglied (1) gehalten wird, mit einem Ende (8) eines kollinear ausgerichteten Bolzens (3) in Eingriff steht.

3. Differentialsperre nach Anspruch 2, wobei das andere Ende der Feder (7) dadurch gehalten wird, dass es innerhalb einer Bohrung (5) innerhalb der Federhalteöffnung (2) angeordnet ist.

4. Differentialsperre nach Anspruch 1, wobei ein Paar von Kupplungsgliedern (1) vorhanden ist, um einen Teil einer Kupplungsanordnung (6) zu bilden.

5. Differentialsperre nach Anspruch 4, wobei das Paar von Kupplungsgliedern (1) mehrere derart ausgerichtete Bolzen (3) und Federn (7) aufweist und symmetrisch angeordnete Bohrungen (5) auf einer Seite und Federhalteöffnungen (2) in der anderen vorhanden sind.

6. Differentialsperre nach Anspruch 1, wobei die Feder (7) eine Schraubenfeder ist und bezüglich des Endes des kollinear ausgerichteten Bolzens (3) dadurch gehalten wird, dass der Bolzen einen Abschnitt mit kleinerem Durchmesser (8) aufweist, derart, dass er in die Mittelöffnung der Schraubenfeder passt.

7. Differentialsperre nach Anspruch 3, wobei die Federhalteöffnung (2) eine Bohrung aufweist, welche tiefer als der Schlitz (10) ist und welche einen Durchmesser hat, der mindestens ebenso groß wie der Durchmesser des Bodens der Feder (7) ist, so dass die Feder dadurch aufgenommen wird und darin gehalten wird.

## Revendications

1. Élément de verrouillage de différentiel comportant un élément d'embrayage (1) comportant une ouverture de retenue de ressort (2) pour supporter un ressort (7) en alignement colinéaire avec une goupille (3) dans un élément d'embrayage supplémentaire positionné de façon correspondante, l'élément de verrouillage de différentiel étant **caractérisé en ce que** l'accès de ressort à travers un côté de l'élément d'embrayage est fourni par une fente (10) passant entièrement à travers une paroi latérale de l'élément d'embrayage et s'étendant à partir d'une face intérieure de l'élément d'embrayage.

2. Élément de verrouillage de différentiel selon la revendication 1, dans lequel le ressort (7), lorsqu'il est retenu dans l'élément d'embrayage (1), entre en prise avec une extrémité (8) d'une goupille alignée de façon colinéaire (3).

3. Élément de verrouillage de différentiel selon la revendication 2, dans lequel l'autre extrémité du ressort (7) est supportée en étant positionnée à l'intérieur d'un alésage (5) à l'intérieur de l'ouverture de retenue de ressort (2).

4. Élément de verrouillage de différentiel selon la revendication 1, dans lequel il y a une paire d'éléments d'embrayage (1) pour former une partie d'un ensemble d'embrayage (6).

5. Élément de verrouillage de différentiel selon la revendication 4, dans lequel la paire d'éléments d'embrayage (1) comportent une pluralité de goupilles (3) et de ressorts (7) ainsi alignés et il y a des alésages agencés symétriquement (5) sur un côté et des ouvertures de retenue de ressort (2) dans l'autre.

6. Élément de verrouillage de différentiel selon la revendication 1, dans lequel le ressort (7) est un ressort hélicoïdal et est retenu, par rapport à l'extrémité de la goupille alignée de façon colinéaire (3), par la goupille comportant une partie de diamètre plus étroit (8) afin d'aller à l'intérieur du centre du ressort hélicoïdal.

7. Élément de verrouillage de différentiel selon la revendication 3, dans lequel l'ouverture de retenue de ressort (2) comprend un alésage qui est plus profond que la fente (10) et qui présente un diamètre est au moins aussi important que le diamètre de la partie inférieure du ressort (7) pour que le ressort s'appuie et soit retenu dans celui-ci.
